# EUROPEAN PATENT APPLICATION

(11) **EP 3 144 906 A1**
(43) Date of publication of application: **22.03.2017**
(21) Application number: 16185623.2
(22) Date of filing: 25.08.2016
(51) Int. Cl.: G07G 1/12, G06Q 20/20

(54) **MERCHANDISE SALES PROCESSING APPARATUS**

(30) Priority: 14.09.2015 JP 2015180951
(71) Applicant: Toshiba TEC Kabushiki Kaisha, Tokyo 141-0032 (JP)
(72) Inventor: MIYAKAWA, Daichi, Shinagawa-ku, Tokyo 141-8562 (JP)
(74) Representative: Takeuchi, Maya

(57) **Abstract**

A merchandise sales processing apparatus according to an embodiment performs payment processing for a sales transaction. An input device receives a payment amount information for one or more items in the sales transaction. A cash receiving device receives cash payment for the sales transaction. A communication unit provides a credit or debit amount to an electronic money. A controller calculates a total payment amount due based on the payment amount information for all of the one or more items in the sales transaction. The controller also calculates a change amount due based on a difference between a cash payment accepted in the cash receiving device and the calculated total amount due. The communication unit provides a credit of at least a portion of the calculated change amount due to the electronic money.

## Description

Embodiments described herein relate generally to a merchandise sales data processing apparatus.

Generally, a checkout system for paying for merchandise is located in a store such as a supermarket. In many cases, for example, a machine which is referred to as a point of sales (POS) register is located in the checkout system. The machine performs registration of merchandise and collection of payment for merchandise, in accordance with an operation of a salesperson (cashier). Recently, a semi-self-service type checkout system and a self-service type checkout system are known among such checkout systems in which a registration machine for registering merchandise, and an accounting machine for collecting payment for merchandise which is registered by the registration machine are located. In the semi-self-service type checkout system, a cashier operates the registration machine, and a shopper operates the accounting machine. In the self-service type checkout system, a shopper performs all operations for registration of merchandise and collection of payment for the merchandise.

When the shopper performs a payment operation, any method of payment can be selected from a plurality of options such as cash, a credit card, and electronic money. When cash is selected as the payment method, a shopper inserts bills or coins of an amount of money which is more than price to be paid, into a change device, and then instructs payment. When a change occurs in this payment, the change is discharged from the change device.

When payment in cash is performed by an operation of a shopper, the shopper is required to take the change from the change device for him/herself. Thus, when the shopper performs another operation during or after the discharge of the change, the shopper may forget to collect the change. The shopper is required to perform an operation of putting the change into the wallet after taking out the change which is discharged from the change device. That is, if the change is not put into the wallet even when payment in the accounting machine is completed, the accounting machine is not empty. Thus, a start of accounting processing for the next shopper is not possible.

To help processing faster payments, a merchandise sales processing apparatus that performs payment processing for a sales transaction, may comprise comprising: an input device configured to receive payment amount information for one or more items in the sales transaction; a cash receiving device configured to receive cash payment for the sales transaction; a communication unit configured to provide a credit or debit amount to an electronic money.

The merchandise sales processing apparatus may also comprise a controller configured to: calculate a total payment amount due based on the payment amount information for all of the one or more items in the sales transaction, calculate a change amount due based on a difference between a cash payment accepted in the cash receiving device and the calculated total amount due, and control the communication unit to provide a credit of at least a portion of the calculated change amount due to the selected electronic money.

The communication unit may be configured to adjust the credit or debit according to a type of electronic money which may be selected from a plurality of different types of electronic moneys.

The apparatus may further comprise a display device controlled by the controller to display a selection screen that instructs a user to select to receive the calculated change amount due as one of electronic money and cash.

The controller may advantageously control the communication unit to not provide the credit to the electronic money when cash is selected in response to the selection screen.

The apparatus may further comprise a change device configured to provide change.

The controller may further be configured to control the change device to provide cash change, in such a way that a sum of the cash change provided by the change device and the credit provided to the electronic money is equal to the calculated total amount due.

The controller may advantageously control the communication unit so that the credit provided to the electronic money is a multiple of a predetermined amount of money.

The controller may be configured to control the change device so that the cash change provided by the change device does not include coins.

The input device may be configured to receive customer information for providing the calculated change amount due to the electronic money.

The invention also relates to a method of performing payment processing for a sales transaction, the method comprising the steps of: receiving payment amount information for each of one or more items in the sales transaction; calculating a total payment amount due based on the payment amount information received for all of the one or more items in the sales transaction; processing a cash payment for the sales transaction; calculating a change amount due based on a difference between the received cash payment; and processing a credit permission for at least a portion of the calculated change amount due to an electronic money.

The method may comprise the step of: displaying, on a display device, a selection screen that instructs a user to select to receive the calculated change amount due as one of electronic money and cash, wherein the credit is provided to the electronic money when only when electronic money is selected in response to the selection screen.

The electronic money may be selected from a plurality of different types of electronic money.

The method may further comprise the step of: providing cash change with a change device, and calculating a sum of the cash change provided with the change device and the credit provided to the electronic money to assess the calculated total amount due.

According to the method, the credit provided to the electronic money may be calculated to be a multiple of a predetermined amount of money.

In the method, the amount of cash change proposed by the change device may be calculated so as not to include coins.

According to the invention, a merchandise sales processing apparatus that performs payment processing for a sales transaction, may comprise: a communication interface configured to receive a total amount due for the sales transaction; a cash receiving device configured to accept cash payment for the sales transaction; a communication unit configured to provide a credit or debit amount to an electronic money; and a controller configured to: calculate a change amount due based on a difference between a cash payment accepted in the cash receiving device and the received total amount due, and control the communication unit to provide a credit of at least a portion of the calculated change amount due to the electronic money.

The communication unit may be configured to provide the credit or debit amount to a plurality of different types of electronic money.

The apparatus may further comprise: a display device controlled by the controller to display a selection screen that instructs a user to select to receive the calculated change amount due as one of electronic money and cash.

Preferably, the controller controls the communication unit to not provide the credit to the electronic money when cash is selected in response to the selection screen.

The apparatus may further comprise: a change device configured to provide change, wherein the controller is further configured to control the change device to provide cash change.

In this case, a sum of the cash change provided by the change device and the credit provided to the electronic money is equal to the calculated total amount due.

Preferably, the controller further controls the communication unit so that the credit provided to the electronic money is a multiple of a predetermined amount of money.

Preferably, the controller further controls the change device so that the cash change provided by the change device does not include coins.

### DESCRIPTION OF THE DRAWINGS

FIG. 1 is a block diagram illustrating an example configuration of a merchandise sales processing system according to an embodiment.
FIG. 2 is a block diagram illustrating an example configuration of a registration machine.
FIG. 3 is a block diagram illustrating an example configuration of an accounting machine.
FIG. 4 is a flowchart illustrating an example sequence of operations performed by the accounting machine.
FIG. 5 is a flowchart illustrating an example sequence of operations performed by the accounting machine.
FIG. 6 illustrates an example operation screen for confirming a use of a membership card.
FIG. 7 illustrates an example payment type selection screen.
FIG. 8 illustrates an example operation screen for urging a shopper to insert cash.
FIG. 9 illustrates an example charging confirmation screen.
FIG. 10 illustrating an example charging destination selection screen.
FIG. 11 illustrates an example confirmation screen.
FIG. 12 illustrates an example card touch screen.

### DETAILED DESCRIPTION

According to the exemplary embodiment, there is provided a merchandise sales data processing apparatus which can reduce operation time of a shopper and prevent forgetting of the presence of the change when payment in cash is performed by an operation of the shopper.

A merchandise sales processing apparatus according to an embodiment performs payment processing for a sales transaction. An input device receives a payment amount information for one or more items in the sales transaction. A cash receiving device receives cash payment for the sales transaction. A communication unit provides a credit or debit amount to an electronic money. A controller calculates a total payment amount due based on the payment amount information for all of the one or more items in the sales transaction. The controller also calculates a change amount due based on a difference between a cash payment accepted in the cash receiving device and the calculated total amount due. The communication unit provides a credit of at least a portion of the calculated change amount due to the electronic money.

Hereinafter, an embodiment will be described with reference to the drawings.

A merchandise sales processing system according to the embodiment is achieved as, for example, a semi-self-service type checkout system which is located in a store such as a supermarket. The merchandise sales processing system includes at least one registration machine, a plurality of accounting machines, and a store server. The store server is connected to the registration machine and the accounting machines through a network. The registration machine and the accounting machines may be provided as a merchandise sales processing apparatus.

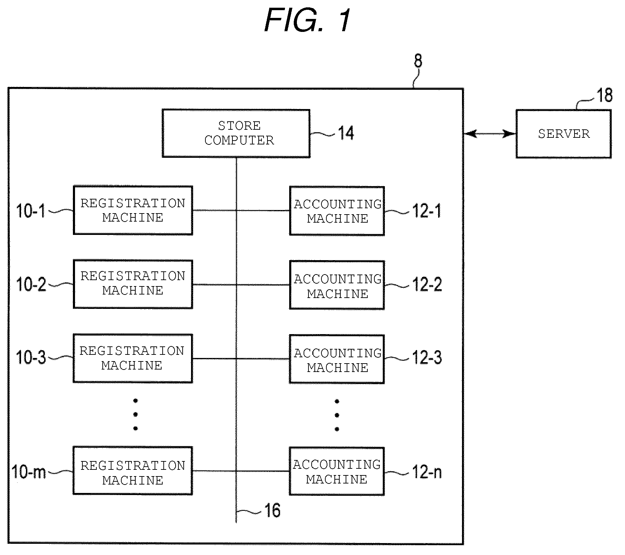

FIG. 1 is a block diagram illustrating an example configuration of the merchandise sales processing system 8 according to the embodiment.

As can be seen in FIG. 1, a plurality (m) of registration machines 10-1, 10-2, 10-3, ... , and 10-m, and a plurality (n) of accounting machines 12-1, 12-2, 12-3, ... , and 12-n are provided. The registration machines 10-1, 10-2, 10-3, ... , and 10-m, the accounting machines 12-1, 12-2, 12-3, ... , and 12-n, and a store computer (server) 14 may be connected to each other through a network 16 such as a local area network (LAN), and may transmit and receive data to and from each other.

The merchandise sales data processing system 8 is located, for example, in a state where one registration machine 10 and two accounting machines 12 are combined. Three accounting machines 12 or more may be arranged for one registration machine 10. The combination of the registration machine 10 and the accounting machine 12 may be set to be unspecified. That is, a combination in which any of a plurality of accounting machines 12 can perform accounting processing on registration information generated by each of a plurality of registration machines 10 may be provided.

The registration machine 10 is a device for registering merchandise desired to be purchased by a shopper and for generating registration information. In the registration machine 10, an operation of registering merchandise is performed by an employee referred to as a checker. The registration machine 10 may also include a function of an accounting processing based on the registration information, performed by an operation of the checker, similar to the function of the accounting machine 12.

The accounting machine 12 is a device for receiving the registration information generated by the registration machine 10, and for performing the accounting processing (payment of price for sales merchandise) based on the received registration information. The accounting machine 12 is operated by a shopper. The accounting machine 12 may also be operated by the checker. Any of a plurality of payment types can be selected by a shopper in the accounting machine 12. For example, cash, a credit card, electronic money, and the like may be selected as the payment type. The accounting machine 12 in the embodiment has a function of collecting cash payment for sales merchandise when cash is selected as the payment type. When change is required from the cash payment, the accounting machine 12 also has a function of charging a monetary value corresponding to the change to electronic money.

The store computer 14 manages all of registration machines 10 and accounting machines 1 which are included in the checkout system. The store computer 14 receives registration information generated by the registration machine 10 (10-1, 10-2, 10-3, ... , and 10-m), and transmits the received registration information to any of the accounting machines 12 (12-1, 12-2, 12-3, ... , and 12-n2) in which the accounting processing is performed.

The server 18 is a server that manages electronic money from the accounting processing of the merchandise sales data processing system 8 (accounting machines 12-1, 12-2, 12-3, ..., 12-n).

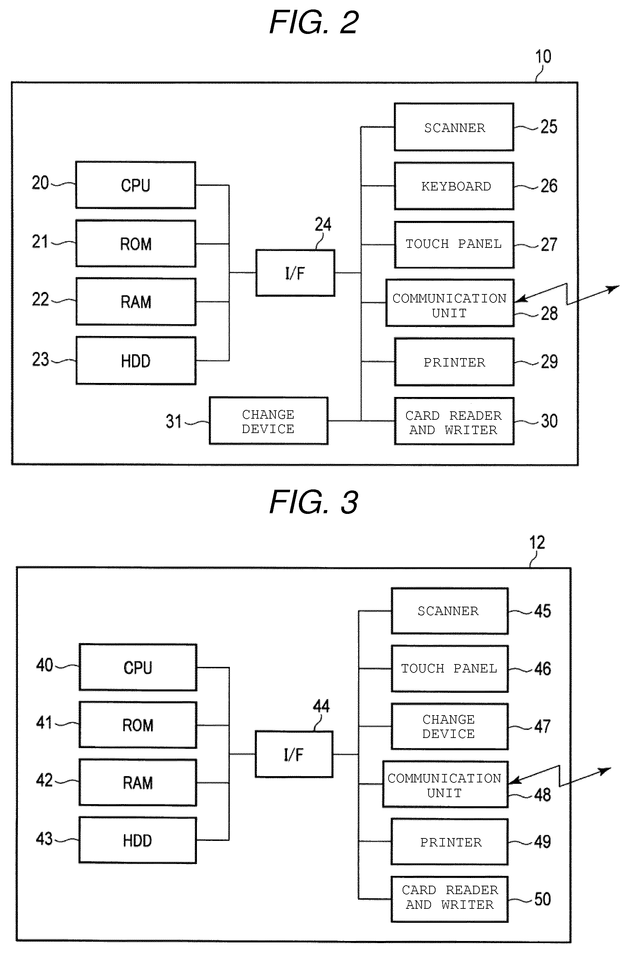

FIG. 2 is a block diagram illustrating an example configuration of the registration machine 10 (10-1, 10-2, 10-3, ... , and 10-m) in the embodiment.

The registration machine 10 includes a central processing unit (CPU) 20, a read-only memory (ROM) 21, a random-access memory (RAM) 22, a hard disk drive (HDD) 23, an I/F (interface) unit 24, a scanner 25, a keyboard 26, a touch panel 27, a communication unit 28, a printer 29, and a card reader and writer 30.

The CPU 20 controls each registration machine 10, based on an operating system, middleware, and an application program which are recorded in the ROM 21 and the RAM 22.

Data which is referred to when the CPU 20 performs various processing is recorded in the ROM 21 and the RAM 22, in addition to various programs executed by the CPU 20. When processing of registering information of merchandise is performed, a registration information list is recorded in the RAM 22. In the registration information list, a transaction ID issued for a purchase transaction of merchandise by the shopper 4, and registration information obtained based on information read from each pieces of merchandise are correlated with each other.

A control program is included in a program executed by the CPU 20. The control program is used for performing the following processing: inputting merchandise information (merchandise code and the like); generating registration information used in the accounting processing based on the merchandise information; determining identification information (transaction ID) for identifying one transaction (generally, purchase of merchandise by one shopper 4); accounting processing performed based on the registration information; and transmitting the registration information to the store computer 14 and causing the transmitted registration information to be recorded in the store computer 14.

The HDD 23 corresponds to an auxiliary storage part of a computer. The HDD 23 stores data used when the CPU 20 performs various processing, or data generated by processing of the CPU 20. Instead of the HDD 23, for example, a solid state drive (SSD) and the like may be used.

The I/F (interface) unit 24 transfers data to be received and transmitted between the CPU 20, the ROM 21, the RAM 22, and the HDD 23, and the scanner 25, the communication unit 28, the touch panel 27, the printer 29, and the card reader and writer 30. As the I/F unit 24, for example, a well-known I/F unit which includes various buses such as a system bus, and various interface circuits for connecting the buses and the above units may be used.

The scanner 25 reads merchandise information, for example by optical scanning, and thereby receives a merchandise code specific to the merchandise as input. As the scanner 25, a fixed or a hand-held two-dimensional code scanner may be used, and a scanner that identifies merchandise using an image recognition technology may also be used. As the scanner 25, one type may be provided or plural types may be provided.

Numeric keys for inputting amount of money, a calculation key for performing calculation such as the subtotal and the grand total, keys for inputting various commands, merchandise keys assigned to specific types of merchandise, and the like are provided in the keyboard 26. An operation with respect to each of the above-described keys may be output as a corresponding command.

The touch panel 27 includes a display device and a touch sensor. The display device displays a screen such as a graphical user interface (GUI) screen. For example, the display device displays a list of registration information (merchandise name, amount of money, and the like) relating to merchandise which is registered as a purchase target, the subtotal amount of money, various menus, a button for inputting a command, and the like. As the display device, for example, a well-known device such as a color liquid crystal display (LCD) may be used. The touch sensor is arranged so as to overlap a display surface of the display device. The touch sensor detects a touched position on the display surface of the display device by an operator, and transmits the detected position information to the CPU 20. As the touch sensor, a well-known device may be used.

The communication unit 28 performs communication between the store computer 14 and the accounting machine 12 through a LAN 13.

As the printer 29, for example, a thermal printer, a dot impact printer, or the like may be used. The printer 29 prints various character strings, an image, a code pattern (two-dimensional code and the like), and the like on a sheet for a receipt, so as to issue a receipt.

The card reader and writer 30 reads data recorded in a card and writes data in the card. As the card, various cards in which information regarding accounting processing is recorded may be used. For example, a membership card, a point card, a credit card, a debit card, an electronic money card, and a prepaid card can be read from and written to. The card reader and writer 30 may be a magnetic type, a contact type, or a non-contact type. The card reader and writer 30 may include plural types.

A display (for example, LCD) for providing the shopper 4 with information may be provided in the registration machine 10.

FIG. 3 is a block diagram illustrating an example configuration of the accounting machine 12 (12-1, 12-2, 12-3, ... , and 12-n) according to the embodiment.

The accounting machine 12 includes a CPU 40, a ROM 41, a RAM 42, a HDD 43, an I/F (interface) unit 44, a scanner 45, a touch panel 46, a change device 47, a communication unit 48, a printer 49, and a card reader and writer 50.

The CPU 40 is a controller for the accounting machine 12 that functions on an operating system, middleware, and an application program which are recorded in the ROM 41 and the RAM 42.

Data which is referred to when the CPU 40 performs various processing is recorded in the ROM 41 and the RAM 42, in addition to various programs executed by the CPU 40.

A control program for performing various processing is included in a program executed by the CPU 40. The various processing includes, for example, accounting processing performed by an operation of the shopper 4 based on registration information. The registration information is generated by the registration processing in the registration machine 10, and is provided to the accounting machine 12. The accounting processing according to the embodiment can be started before the registration processing in the registration machine 10 is completed.

The HDD 43 corresponds to an auxiliary storage part of a computer. The HDD 43 stores data used when the CPU 40 performs various processing, or data generated by processing of the CPU 40. Instead of the HDD 43, for example, a SSD and the like may be used.

The I/F (interface) unit 44 transfers data to be received and transmitted between the CPU 40, the ROM 41, the RAM 42, and the HDD 43, and the scanner 45, the touch panel 46, the change device 47, the communication unit 48, the printer 49, and the card reader and writer 50. As the I/F unit 44, for example, a well-known I/F unit which includes various buses such as a system bus, and various interface circuits for connecting the buses and the above units may be used.

The scanner 45 reads information, for example by optical scanning, and thereby receives a code as input. For example, the scanner 45 is used for reading a code (for example, two-dimensional code) of a receipt printed by the printer 29 of the registration machine 10. A code which is issued by the registration machine 10, and indicates identification information (transaction ID) for identifying one transaction may be printed on the receipt. As the scanner 45, a fixed or a hand-held two-dimensional code scanner may be used, and a scanner that identifies merchandise based on an image recognition technology may be used. As the scanner 45, one type may be provided or plural types may be provided.

The touch panel 46 includes a display device and a touch sensor. The display device displays a screen such as a GUI screen. For example, the display device displays a list of registration information (merchandise name, amount of money, and the like) relating to merchandise which is registered as a purchase target, the subtotal amount of money, various menus, a button for inputting a command, and the like. As the display device, for example, a well-known device such as a color liquid crystal display (LCD) may be used. The touch sensor is arranged to overlap with a display surface of the display device. The touch sensor detects a touched position on the display surface of the display device by an operator, and transmits the detected position information to the CPU 40. As the touch sensor, a well-known device may be used.

The change device 47 receives coins and bills which are inserted into the change device 47. The change device 47 discharges coins and bills corresponding to change.

The communication unit 48 performs communication between the store computer 14 and the registration machine 10 through a LAN 13.

As the printer 49, for example, a thermal printer, a dot impact printer, or the like is used. The printer 49 prints various character strings, an image, or the like on a sheet for a receipt, so as to issue a receipt and the like.

The card reader and writer 50 reads data recorded in a card and writes data in the card. As the card, various cards in which information regarding accounting processing is recorded may be used. For example, a membership card, a point card, a credit card, a debit card, an electronic money card, and a prepaid card can be read from and written to. The card reader and writer 50 may be a device of a magnetic type, a contact type, or a non-contact type. The card reader and writer 50 may include plural types.

Next, an operation of the merchandise sales data processing system according to the embodiment will be described.

First, registration processing in the registration machine 10 will be described.

When the scanner 25 reads merchandise information (merchandise code) by the scan operation of the checker, the CPU 20 of the registration machine 10 receives data (merchandise name, net amount of money, and other types of data) relating to merchandise which corresponds to the read merchandise code, from the store computer 14. The CPU 20 generates registration information to be subjected to the accounting processing.

The CPU 20 adds registration information (merchandise name, amount of money, and the like) relating to registered merchandise, as well as the subtotal amount of money, and the like to a list displayed in the touch panel 27. The CPU 20 transmits the registration information correlated with the transaction ID, to the store computer 14, and the CPU 20 causes the transmitted information to be recorded in the store computer 14.

The checker repeats the scan operation for each piece of merchandise which is in the shopping basket 7, i.e., which is a purchase target, in a manner similar to the above descriptions. The CPU 20 generates registration information regarding each piece of merchandise, and sequentially transmits the corresponding registration information to the store computer 14.

When the scan operation for all pieces of merchandise is completed, the checker initiates completion of the registration operation by performing an operation with the keyboard 26 or the touch panel 27 (for example, operation with a settlement key). When the instruction to complete the registration operation is received from the checker, the CPU 20 notifies the store computer 14 that completion of the registration operation is initiated.

Next, the processing in the accounting machine 12 will be described.

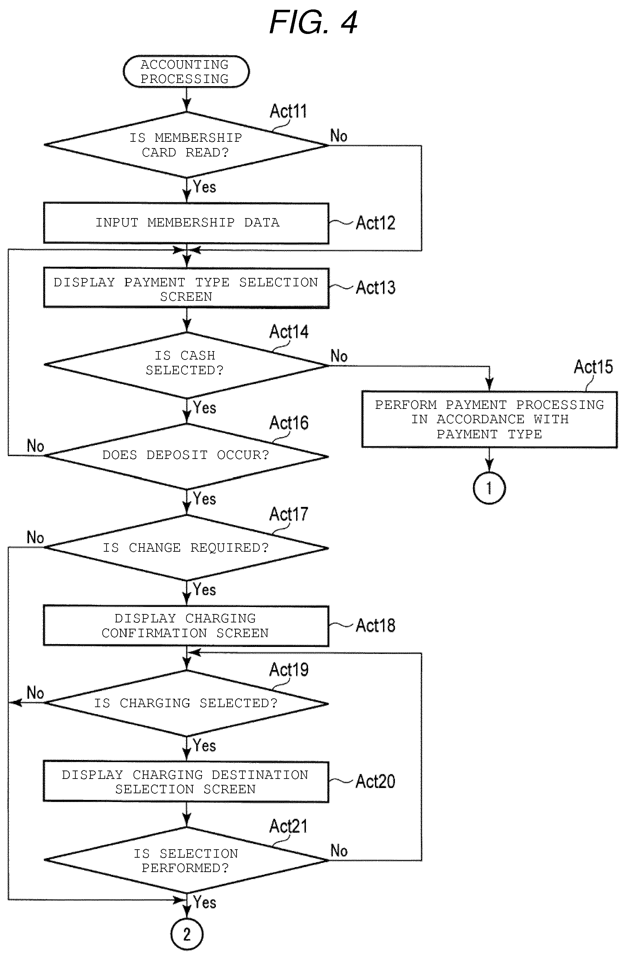

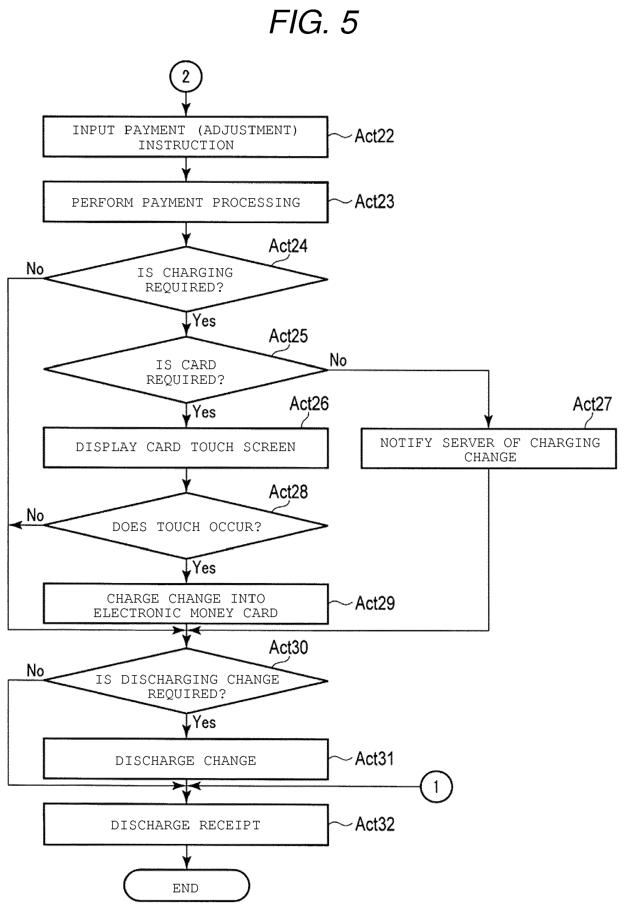

FIGS. 4 and 5 are flowcharts illustrating example sequences of operations of the accounting machine 12 according to the embodiment. When change is required due to the price for merchandise being paid by cash, the accounting machine 12 in the embodiment does not always discharge the change by cash, but can charge the change to electronic money. The accounting machine 12 in the embodiment may charge the change amount to different types of electronic money such as IC card type electronic money and server type electronic money. The IC card type electronic money has an IC chip mounted therein, and data indicating a monetary value is recorded in the IC chip. The server type electronic money includes data indicating a monetary value recorded in the server 18 which is connected through the network, in correlation with ID data recorded in a card.

First, a transaction ID issued in the registration machine 10 is input, and thus the accounting machine 12 may perform accounting processing on registration information of merchandise which is registered in the registration machine 10. In a state of readiness for performing of accounting processing, the accounting machine 12 displays, for example, an operation screen for confirming a use of a membership card, on the touch panel 46.

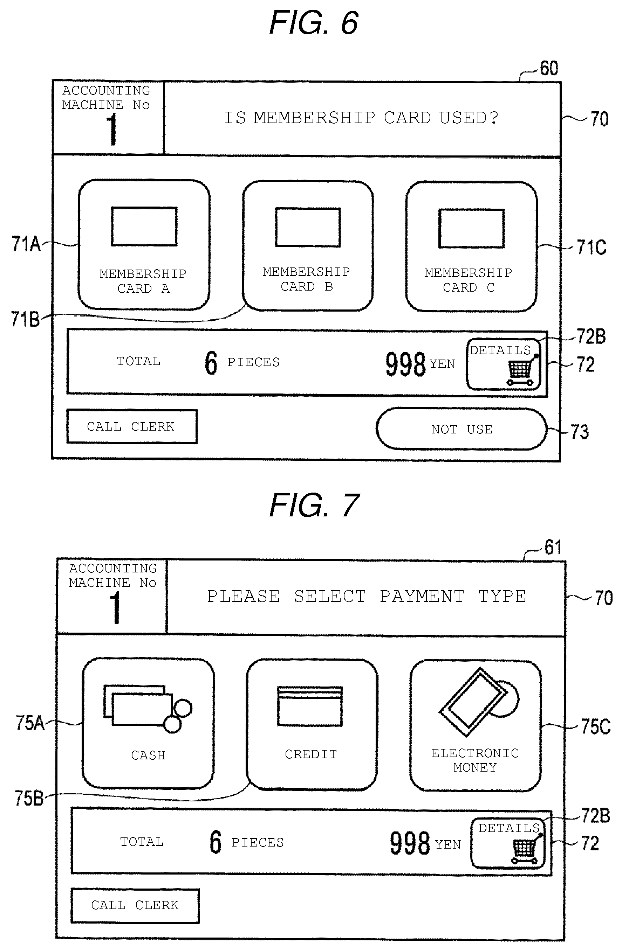

FIG. 6 is a diagram illustrating an example of an operation screen 60 for confirming a use of a membership card.

A message 70 and buttons 71A, 71B, and 71C are displayed on the operation screen 60. The message 70 is provided in order to describe an operation on the operation screen ("membership card is used?"). The buttons 71A, 71B, and 71C are provided for selecting any of the different types of membership cards A, B, and C. As the different types of membership cards A, B, and C, for example, a card in which only member-specific ID data is recorded, a card which includes electronic money function or a credit card function, and the like are provided.

A total price display area 72 and a button 73 are provided on the operation screen 60. The number of pieces of merchandise which are registered in the registration machine 10 as targets of accounting processing, and the total amount of money (payment amount of money) of the above pieces of merchandise are displayed in the total price display area 72. The button 73 is used for performing an instruction of not using a membership card. A details button 72B is provided on the total price display area 72. The details button 72B is used for displaying information of merchandise registered in the registration machine 10, in a detailed list.

Here, when an operation of selecting any of the buttons 71A, 71B, and 71C is performed by a shopper, the CPU 40 is in a state where a membership card corresponding to the selected button can be read. When an operation causing the card reader and writer 50 to read the membership card is performed by the shopper (Act 11, Yes), the CPU 40 receives an input of membership identification data that is recorded in the membership card, through the card reader and writer 50 (Act 12). The membership data is input, and thus the CPU 40 can perform, for example, processing of privileges for a member in advance. Examples of the member privileges include discount (discount of 5% or the like) of payment price and application of points.

For example, even when the shopper intends to pay for the merchandise by cash, the shopper may use the membership card for obtaining the above-described privilege. Also, when payment is performed by using a membership card in which the electronic money function or the credit card function is included, payment of change does not occur, understandably.

After reading the membership card is completed, or when an instruction of not using the membership card is performed by an operation of the button 73 on the operation screen 60, the CPU 40 performs payment type selection processing and displays a payment type selection screen on the touch panel 46 (Act 13). The payment type selection screen is used for instructing a shopper to select a payment type.

FIG. 7 is a diagram illustrating an example of a payment type selection screen 61. A message 70 and buttons 75A, 75B, and 75C are displayed on the payment type selection screen 61. The message 70 is provided in order to describe an operation on the operation screen ("please select a payment type"). The buttons 75A, 75B, and 75C are provided for selecting any of, for example, cash, credit card, or electronic money as the payment type. As the payment type, types other than the above-described types may be provided. The total price display area 72 is provided on the payment type selection screen 61, similar to the operation screen 60.

Here, when the button 75B or 75C for selecting a credit card or electronic money as the payment type is operated by a shopper (Act 14, No), the CPU 40 performs payment processing in accordance with the corresponding payment type. Details of performing payment by a credit or electronic money are known and will be omitted.

When the button 75A for selecting cash as the payment type is operated by a shopper (Act 14, Yes), the CPU 40 displays an operation screen instructing the shopper to insert cash on the touch panel 46.

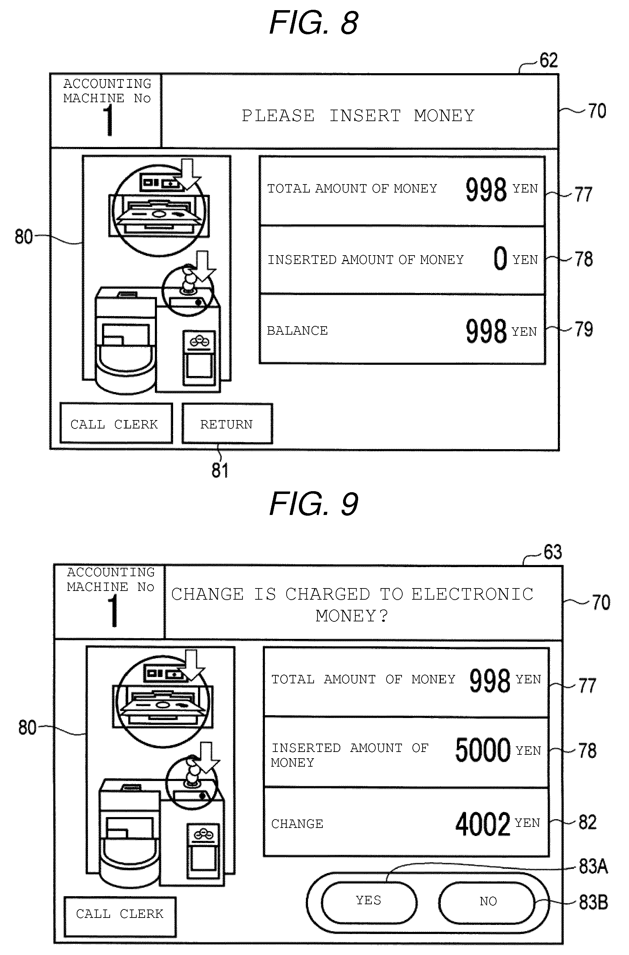

FIG. 8 is a diagram illustrating an example of an operation screen 62 which is displayed on the touch panel 46 of the accounting machine 12 in the embodiment, and is used for instructing a shopper 4 to insert cash. A message 70, an operation guide 80, and a return button 81 are displayed on the operation screen 62. The message 70 is provided on the operation screen in order to instruct the shopper 4 to perform an operation. The operation guide 80 is provided in order to illustrate an operation to the shopper 4. The return button 81 is provided in order to return to a processing state in which the payment type selection screen 61 is displayed. A total amount of money 77 for all pieces of merchandise which are registered as a target to be purchased, an inserted amount of money 78, and balance 79 are displayed on the operation screen 62. The inserted amount of money 78 indicates the summation of bills and coins currently inserted into the change device 47 by an operation of a shopper. The balance 79 indicates an amount of money which presents a difference between the current total amount of money and the currently-inserted amount of money. The balance 79 is updated every time cash is inserted into the change device 47 by the shopper. The shopper considers the balance 79, and can recognize an amount of money to be inserted.

When an operation on the return button 81 is detected (Act 16, No), the CPU 40 discharges bills and coins which have been currently inserted, from the change device 47, and displays the payment type selection screen 61. The CPU 40 returns to a processing state for causing the shopper to again select a payment type.

When cash which is more than the total amount of money required for payment is inserted (deposited) (Act 16, Yes), and change from the input cash is required (Act 17, Yes), the CPU 40 displays a charging confirmation screen on the touch panel 46 (Act 18). The charging confirmation screen allows the shopper to confirm charging of the change to electronic money.

FIG. 9 is a diagram illustrating an example of a charging confirmation screen 63 in the embodiment.

A message of "change is charged to electronic money?" is displayed as a message 70 on the charging confirmation screen 63. The total amount of money 77, the inserted amount of money 78, and the amount required change 82 are displayed on the charging confirmation screen 63. Buttons 83A and 83B are also provided on the charging confirmation screen 63. The buttons 83A and 83B are used for receiving an instruction from the shopper of whether the change is taken as cash or is charged to electronic money, from the shopper. The button ("Yes") 83A is used for an instruction of charging the change to electronic money, and the button ("No") 83B is used for an instruction of taking the change as cash.

Here, when it is detected that the button ("Yes") 83A is operated (Act 19, Yes), the CPU 40 displays a charging destination selection screen on the touch panel 46 (Act 20). The charging destination selection screen is used for causing the shopper to select an electronic money destination as a charging destination.

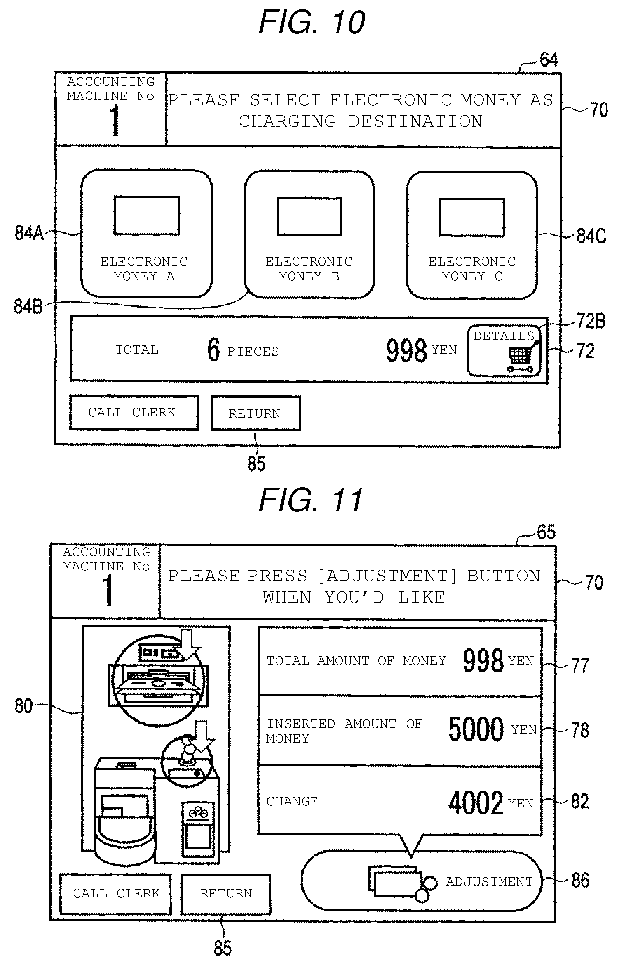

FIG. 10 is a diagram illustrating an example of a charging destination selection screen 64 in the embodiment.

A message of "please select electronic money as a charging destination" is displayed as a message 70 on the charging destination selection screen 64. Buttons 84A, 84B, and 84C for selecting any of plural types of electronic money A, B, and C are displayed on the charging destination selection screen 64. The types of electronic money A, B, and C may include, for example IC card type electronic money and server type electronic money. In addition, a membership card having electronic money features included therein is included. A return button 85 is displayed on the charging destination selection screen 64. The return button 85 is used for returning to a processing state in which the charging confirmation screen 63 is displayed.

Here, when it is detected that the return button 85 is operated (Act 21, No), the CPU 40 returns to the processing state in which the charging confirmation screen 63 is displayed, and causes the shopper to again select whether the change is charged to the electronic money.

When an operation of selecting any of the buttons 84A, 84B, and 84C is performed on the charging destination selection screen 64 by the shopper (Act 21, Yes), the CPU 40 sets the electronic money corresponding to the selected button, as a charging destination of the change, and displays a confirmation screen 64 on the touch panel 46. When it is detected that the button 83B ("No") is operated on the charging confirmation screen 63 illustrated in FIG. 9, the CPU 40 does not display the charging destination selection screen 64, but instead displays the confirmation screen 65 on the touch panel 46.

FIG. 11 is a diagram illustrating an example of a confirmation screen 65 of performing payment (adjustment) in the embodiment.

A message of "please press [adjustment] button when you'd like" is displayed as a message 70 for describing an operation on the operation screen, on the confirmation screen 65. An adjustment button 86 is provided on the confirmation screen 65. The total amount of money 77, the inserted amount of money 78, and the amount of money 82 of the change are also displayed on the confirmation screen 65. The adjustment button 86 is used for an instruction of performing payment (adjustment). When charging change is set, for example, a message of "change is charged to electronic money" may be displayed on the confirmation screen 65.

Here, when an operation on the adjustment button 86 by the shopper is detected (Act 22), the CPU 40 performs the payment processing based on the difference of the total amount of money which corresponds to merchandise price, and the inserted amount of money of bills and coins inserted into the change device 47 by the shopper (Act 23). Here, when charging of the change to electronic money is required (Act 24, Yes), the CPU 40 determines whether a reading operation of a card having the electronic money function mounted therein to the card reader and writer 50 by the shopper is required.

For example, when the type of electronic money selected on the charging destination selection screen 64 is a membership card in which the server type electronic money function is included, and an input of membership identification data which is recorded in the membership card in advance is completed (in Act 12), the CPU 40 determines that the reading operation to the card reader and writer 50 is not required (Act 25, No). In this case, the CPU 40 notifies the server 18 which manages electronic money, based on input membership identification data, and charges a monetary value of the change to electronic money (Act 27).

When the type of electronic money selected on the charging destination selection screen 64 is IC card type electronic money, the CPU 40 displays a card touch screen on the touch panel 46. The card touch screen is used for instructing the shopper to perform an operation of causing the card reader and writer 50 to read electronic money.

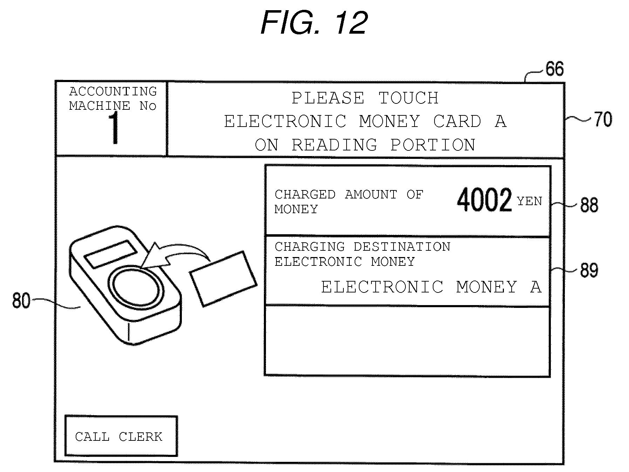

FIG. 12 is a diagram illustrating an example of a card touch screen 66 in the embodiment.

A message of "please touch electronic money card A on reading portion" is displayed as a message 70 on the card touch screen 66. An operation guide 80 is displayed on the card touch screen 66. The operation guide 80 is used for illustrating a method of causing the shopper 4 to touch a card on a reading portion. A charged amount of money 88 and a name of the electronic money 89 (i.e., the charging destination of the change) are displayed on the card touch screen 66.

Here, when an operation of touching an electronic money card on the card reader and writer 50 is performed by the shopper (Act 28, Yes), the card reader and writer 50 charges a monetary value of the required change to the electronic money card (IC chip) (Act 29).

When electronic money other than the membership card is selected on the charging destination selection screen 64, the CPU 40 displays the card touch screen 66 and instructs the shopper 4 to touch the preferred electronic money on the card touch screen 66, similar to the above descriptions. Thus, the CPU 40 accesses the server 18 based on ID data which is recorded in the electronic money card which is read through the card reader and writer 50, and the CPU 40 charges a monetary value of the required change to the selected electronic money.

In this manner, when the change required due to the cash payment is charged to the electronic money, discharging the change is not required (Act 30, No). Thus, the CPU 40 causes the printer 49 to print the details of the payment processing on a receipt sheet, and causes the printer 49 to discharge the receipt sheet. Then, the CPU 40 ends the accounting processing (Act 32). The CPU 40 causes a message indicating the change was charged to electronic money, the amount of the change, the name of the electronic money as the charging destination, and the like to be printed on a receipt sheet. In addition, typical data such as a merchandise name of purchased merchandise, an amount of money, and the total amount of money (paid price), are printed on the receipt sheet. Thus, the shopper can confirm charging of the change to electronic money from the details printed on the receipt sheet.

When it is selected on the charging confirmation screen 63 that the change is not charged to electronic money (Act 19, No), the CPU 40 determines that charging to the electronic money is not required (Act 24, No). In this case, the CPU 40 determines that discharging change is required when the change occurs by cash payment (Act 30, Yes), and causes the change device 47 to discharge change bills and/or coins(Act 31). The CPU 40 causes a receipt to be discharged, and ends the accounting processing (Act 32).

In the above descriptions, the total price of the change required from the cash payment is charged to the electronic money or discharged as bills and/or coins. However, a portion of the change may be charged to the electronic money, depending on the amount of the required change.

For example, when the change is discharged by cash, and discharging coins would be required, the CPU 40 may charge only an amount of money of the coins to the electronic money. For example, as illustrated on the confirmation screen 65 in FIG. 11, when the amount of money of the change is "4002 yen", only "2 yen" may be charged to the electronic money. Thus, cash to be discharged from the change device 47 as the change is only bills.

In this case, the CPU 40 determines that discharging the change is required in Act 30, and causes a bill ("4000 yen") which is a portion of the change to be discharged from the change device 47. Accordingly, since the shopper may take out only bills from the change device 47, taking out of the change becomes easy. Further, an operation of putting the change into the wallet is simplified, and thus it is possible to reduce an operation time in comparison to a case where bills are discharged along with coins.

The CPU 40 may be set to charge to the electronic money an amount of money in multiples of a predetermined amount. For example, when charging to the electronic money may be set to be possible in multiples of "1,000 yen", the CPU 40 charges only multiples of "1,000 yen" to the electronic money. As illustrated on the confirmation screen 65 in FIG. 11, when the amount of money of the change is "4,002 yen", only "4,000 yen" may be charged to the electronic money. Thus, the cash discharged from the change device 47 as the change may be only coins. Accordingly, since the shopper may take only coins from the change device 47, taking out of the change becomes easy. Further, an operation of putting the change into the wallet is simplified, and thus it is possible to reduce an operation time in comparison to a case where coins are discharged along with bills.

When an upper limit which allows charging to the electronic money is set, the CPU 40 may charge only a portion of the change less than or equal to the upper limit to the electronic money. The CPU 40 may discharge the remainder by cash. At this time, as described above, the CPU 40 may adjust conditions for performing charging to the electronic money, for example, so as to discharge only bills or only coins to be discharged by cash.

As described above, when a portion of change is charged to electronic money depending on the amount of required change, a method used in charging may be set in advance in the accounting machine 12. An operation screen on which selection by a shopper is possible may be displayed, and thus setting the preferred form of change may be performed in accordance with an instruction from the shopper.

In this manner, in the accounting machine 12 according to the embodiment, when payment in cash is performed by an operation of a shopper, change can be charged to electronic money. Thus, an operation of causing the shopper to take out the change and to put the change into the wallet can be unnecessary, and thus it is possible to reduce the operation time. Accordingly, it is possible to release the accounting machine 12 immediately after the payment processing is completed in the accounting machine 12, and to start accounting processing for the next shopper. In addition, the change is not discharged by cash, and thus the shopper does not forget to take the change. As described above, even when a portion of change is charged to electronic money and another portion of the change is discharged by cash, only bills or only coins are discharged. Thus, it is possible to reduce a probability of forgetting to take the change.

In the above descriptions, the accounting machine 12 in the semi-self-service type checkout system (merchandise sales data processing system 8) is set as a target. However, a merchandise sales data processing apparatus which can perform accounting processing may be provided as, for example, an accounting machine located in a self-service type checkout system, or a face-to-face point of sales (POS) terminal in which a salesperson performs all operations for merchandise registration and accounting.

While certain embodiments have been described, these embodiments have been presented by way of example only, and are not intended to limit the scope of the inventions.

## Claims

1. A merchandise sales processing apparatus that performs payment processing for a sales transaction, the apparatus comprising:
an input device configured to receive payment amount information for one or more items in the sales transaction;
a cash receiving device configured to receive cash payment for the sales transaction;
a communication unit configured to provide a credit or debit amount to an electronic money; and
a controller configured to:
calculate a total payment amount due based on the payment amount information for all of the one or more items in the sales transaction,
calculate a change amount due based on a difference between a cash payment accepted in the cash receiving device and the calculated total amount due, and
control the communication unit to provide a credit of at least a portion of the calculated change amount due to the selected electronic money.

2. The apparatus according to claim 1, wherein the communication unit is configured to adjust the credit or debit according to a type of electronic money which may be selected from a plurality of different types of electronic money.

3. The apparatus according to claim 1 or 2, further comprising:
a display device controlled by the controller to display a selection screen that instructs a user to select to receive the calculated change amount due as one of electronic money and cash, wherein
the controller controls the communication unit to not provide the credit to the electronic money when cash is selected in response to the selection screen.

4. The apparatus according to any one of claims 1 to 3, further comprising:
a change device configured to provide change, wherein
the controller is further configured to control the change device to provide cash change, wherein
a sum of the cash change provided by the change device and the credit provided to the electronic money is equal to the calculated total amount due.

5. The apparatus according to claim 4, wherein
the controller further controls the communication unit so that the credit provided to the electronic money is a multiple of a predetermined amount of money.

6. The apparatus according to claim 4 or 5, wherein
the controller further controls the change device so that the cash change provided by the change device does not include coins.

7. The apparatus according to any one of claims 1 to 6, wherein the input device is further configured to receive customer information for providing the calculated change amount due to the electronic money.

8. A method of performing payment processing for a sales transaction, the method comprising the steps of:
receiving payment amount information for each of one or more items in the sales transaction;
calculating a total payment amount due based on the payment amount information received for all of the one or more items in the sales transaction;
processing a cash payment for the sales transaction;
calculating a change amount due based on a difference between the received cash payment; and
processing a credit permission for at least a portion of the calculated change amount due to an electronic money.

9. The method according to claim 8, wherein the electronic money is selected from a plurality of different types of electronic money.

10. The method according to claim 8, further comprising the step of:
displaying, on a display device, a selection screen that instructs a user to select to receive the calculated change amount due as one of electronic money and cash, wherein
the credit is provided to the electronic money when only when electronic money is selected in response to the selection screen.

11. The method according to claims 8 or 9, further comprising the step of:
providing cash change with a change device, and calculating
a sum of the cash change provided with the change device and the credit provided to the electronic money to assess the calculated total amount due.

12. The method according to claim 11, wherein
the credit provided to the electronic money is calculated to be a multiple of a predetermined amount of money.

13. The method according to claim 11 or 12, wherein
the amount of cash change proposed by the change device is calculated so as not to include coins.

14. A merchandise sales processing apparatus that performs payment processing for a sales transaction, the apparatus comprising:
a communication interface configured to receive a total amount due for the sales transaction;
a cash receiving device configured to accept cash payment for the sales transaction;
a communication unit configured to provide a credit or debit amount to an electronic money; and
a controller configured to:
calculate a change amount due based on a difference between a cash payment accepted in the cash receiving device and the received total amount due, and
control the communication unit to provide a credit of at least a portion of the calculated change amount due to the electronic money.
